# EUROPÄISCHE PATENTSCHRIFT

(11) **EP 2 694 911 B1**
(45) Veröffentlichungstag und Bekanntmachung des Hinweises auf die Patenterteilung: **01.11.2023**
(21) Anmeldenummer: 12725293.0
(22) Anmeldetag: 16.03.2012
(51) Int. Cl.: F41H 13/00, G02B 27/14, B23K 26/06

(54) **STRAHLER FÜR GERICHTETE ENERGIE**
RADIATING ELEMENT FOR FOCUSSED ENERGY
ÉMETTEUR POUR ÉNERGIE DIRIGÉE

(30) Priorität: 01.04.2011 DE 102011015779
(43) Veröffentlichungstag der Anmeldung: 12.02.2014
(73) Patentinhaber: MBDA Deutschland GmbH, 86529 Schrobenhausen (DE)
(72) Erfinder: GEIDEK, Franz, 86561 Aresing (DE); PROTZ, Rudolf, 85635 Höhenkirchen-Siegertsbrunn (DE); ZOZ, Jürgen, 86316 Friedberg (DE); NISSL, Norbert, 86571 Langenmosen (DE)
(74) Vertreter: Isarpatent
(86) Internationale Anmeldenummer: PCT/DE2012/000288
(87) Internationale Veröffentlichungsnummer: WO 2012/130211

(56) Entgegenhaltungen:
- EP-A1- 1 637 919
- EP-A1- 2 182 596
- GB-A- 2 467 588
- US-A- 4 953 950
- US-A1- 2009 052 475
- US-A1- 2010 282 942
- US-B1- 6 934 014
- SPRANGLE P ET AL: "Incoherent Combining and Atmospheric Propagation of High-Power Fiber Lasers for Directed-Energy Applications", IEEE JOURNAL OF QUANTUM ELECTRONICS, IEEE SERVICE CENTER, PISCATAWAY, NJ, USA, vol. 42, no. 2, 1 February 2009 (2009-02-01), pages 138-148, XP011239373, ISSN: 0018-9197

## Beschreibung

### TECHNISCHES GEBIET

Die vorliegende Erfindung betrifft einen Strahler für gerichtete Energie mit einer Einrichtung zur Einkoppelung von Strahlen aus mindestens einem Strahlenerzeuger und einer Strahlenkombinationseinrichtung, welche die Strahlen zu kombinierten Strahlen zusammenführt, nach dem Oberbegriff des Anspruchs 1.

### STAND DER TECHNIK

Anhand der auf die Anmelderin zurückgehenden EP2182596 A1 ist ein Strahler für gerichtete Energie bekannt geworden, der auch als taktischer Strahler oder Energiewaffe bezeichnet werden kann und beispielsweise als Laserwaffe ausgebildet sein kann.

Dieser bekannte Strahler besitzt eine Einrichtung zur Einkoppelung von Strahlen aus mindestens einem Strahlenerzeuger und eine Strahlenkombinationseinrichtung, um die Strahlen zu einem hochenergetischen kombinierten Strahl zusammenzuführen. Bei dem Strahlenerzeuger kann es sich um einen industriell verfügbaren Laser handeln, das Einsatzgebiet gattungsgemäßer Laserwaffen wird in der Abwehr von Flugkörperwaffen gesehen, wobei mittels eines gebündelten Laserstrahls auf größere Entfernungen von bis zu einigen einhundert Kilometer eine thermische Einwirkung auf die Außenhaut des Flugkörpers ausgeübt wird, durch welche der Flugkörper zerstört werden kann. Ein Beispiel hierfür ist das fliegende Laserwaffensystem Boeing YAL-1 der US Airforce.

Ein weiteres Anwendungsfeld einer derartigen Hochenergiestrahlenwaffe ist der Gefechtsfeldeinsatz über eine Entfernung von einigen einhundert Metern bis zu einigen Kilometern. Damit kann mittels des hochenergetischen Strahls eine thermische Einwirkung auf Waffen oder Munition ausgeübt werden, durch welche diese kampfunfähig gemacht werden.

In jedem Fall ist es jedoch erforderlich, einen Strahler für gerichtete Energie zur Verfügung zu stellen, der in der Lage ist, eine sehr hohe Strahlung derart abzugeben und punktgenau auf das Ziel zu richten, dass die Strahlung beim Eintreffen auf das Zielobjekt noch ausreichend hoch ist, und dort den gewünschten thermischen Effekt zu bewirken.

Zur erfolgreichen Bekämpfung von Mörsergranaten und ähnlichen Zielen mit einer Hochenergie-Laserwaffe muss diese einen Brennfleck mit einer Intensität von größer 10 kW/cm² im Entfernungsbereich von etwa einem bis etwa drei Kilometern auf dem Ziel erzeugen können. Zur Erfüllung dieser Anforderungen wird in der Laserwaffe eine Laserquelle mit einer Leistung von größer 100 kW benötigt.

Die Entwicklung von Hochenergie-Strahlern, beispielsweise Hochenergielasern, die für derartige Anwendungsfälle geeignet sind, ist zeitaufwändig und kostenaufwändig und beinhaltet nicht unerhebliche Realisierungsrisiken.

Für Industrieanwendungen, zum Beispiel für das Laserschweißen, stehen bereits Laser zur Verfügung, die eine Leistung von einigen Kilowatt und nahezu beugungsbegrenzte Strahlqualität (Beugungsmaßzahl M² < 1,1) besitzen. Diese Leistung, die zwar noch geringfügig steigerbar erscheint, reicht jedoch bei Weitem nicht aus, um den Anforderungen eines taktischen Strahlers, wie er vorstehend erläutert worden ist, zu erfüllen, der auf einige hundert Meter oder sogar mehrere Kilometer Entfernung eine wirksame Energieeinwirkung auf ein Objekt ausüben kann.

Die EP 2 182 596 A1 zeigt eine bewegliche Optik, die als Spiegeloptik ausgebildet ist, wobei Laserstrahlen, die aus einem Lichtleiter eines Bündels von Lichtleitern austreten auf jeweils einen Kollimationsspiegel geleitet werden und auf eine Fokussiereinrichtung reflektiert werden.

Die US 6,934,014 B1 offenbart eine Vorrichtung mit zumindest einer Lichtquelle, die mehrere individuelle Lichtquellen enthält. An einem ringförmigen Kühlkörper sind eine Vielzahl von Laser-Dioden über einen Innenumfang verteilt angeordnet, deren Licht auf eine Spiegeloptik trifft.

Die US2010282942 A1 offenbart eine Vorrichtung zum Ausrichten hochenergetischer Laserstrahlung auf ein Zielobjekt.

### DARSTELLUNG DER ERFINDUNG

Aufgabe der vorliegenden Erfindung ist es, einen Strahler für gerichtete Energie zur Verfügung zu stellen, der zu überschaubaren Kosten eine wirksame Energieeinwirkung auf ein bewegtes Objekt aus einer Entfernung von mehreren hundert Metern bis hin zu einigen Kilometern ermöglicht.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung sieht einen Strahler für gerichtete Energie mit einer Einrichtung zur Einkoppelung von Strahlen aus mindestens einem Strahlenerzeuger und einer Strahlenkombinationseinrichtung vor, welche die Strahlen zu kombinierten Strahlen zusammenführt, wobei die Strahlenkombinationseinrichtung eine Teleskopoptik mit einem Kollimationsspiegel und einem Fangspiegel aufweist und die Einrichtung zur Aufnahme von gerichteten Strahlen aus einer Mehrzahl von Lichtleiteinrichtungen aus dem mindestens einen Strahlenerzeuger ausgebildet ist.

Die Einrichtung zur Aufnahme von gerichteten Strahlen ermöglicht die Einkoppelung von hochenergetischen Strahlen aus einem oder einer Mehrzahl von vorzugsweise kommerziell verfügbaren Strahlern, beispielsweise industriell verfügbaren Lasern, die zur Werkstückbearbeitung vorgesehen sind und in großen Stückzahlen kostengünstig verfügbar sind. Die von diesen Strahlern emittierten Strahlen werden mittels Lichtleiteinrichtungen an eine Aufnahmeoptik des erfindungsgemäßen Strahlers übertragen und dort eingekoppelt. Der Kollimationsspiegel dient unter anderem zur Ausrichtung der so gebündelten Strahlung auf ein Zielobjekt, weitere Funktionen des Kollimationsspiegels werden nachfolgend erläutert werden und der Fangspiegel dient unter anderem der Fokussierung des kombinierten Strahls auf ein Zielobjekt.

Der Strahler ist vorzugsweise zur räumlich weitgehend koaxialen Einkoppelung von Strahlen aus mindestens einer hochenergetischen Laserlichtquelle ausgebildet. Zu diesem Zweck können an der Teleskopoptik optische Kupplungseinrichtungen vorgesehen sein, über die aus Endstücken von Lichtleitfasern die Strahlung von mindestens einem, vorzugsweise mindestens zwei Erzeugern hochenergetischer gerichteter Strahlen eingekoppelt werden kann. Als Erzeuger der hochenergetischen Laserstrahlen können beispielsweise Industrie-Festkörperlaser mit einer Wellenlänge von 1,07 µm verwendet werden. Diese Anordnung ermöglicht die kostengünstige Applikation von kommerziell verfügbaren Strahlenerzeugern und die Einkopplung von Energie in den Strahler entsprechend dem jeweiligen applikationsspezifischen Energiebedarf durch eine Einkopplung von Energie aus einer Mehrzahl von Strahlenerzeugern.

Der erfindungsgemäße Strahler ist vorzugsweise zur Bündelung der Strahlen zu einem parallelen Strahl mittels eines Parabolspiegels und zur Leitung der Strahlen in einzelnen Strahlachsen mittels eines Strahlteilerspiegels auf unterschiedliche Subaperturen der Teleskopoptik ausgebildet.

Zur Strahlkombination der verschiedenen Laserstrahlen oder Strahlenenergie wird die aus Enden der vorstehend angesprochenen Lichtleitfasern austretende Laserstrahlung mittels des Parabolspiegels zu einem parallelen Strahl mit geringem Durchmesser, typischerweise einem bis zwei Zentimetern Durchmesser gebündelt und in den einzelnen Strahlachsen über den Strahlteilerspiegel und insbesondere weitere optische Bauteile auf unterschiedliche Subaperturen der Teleskopoptik gelenkt.

Bei dem Strahlteilerspiegel handelt es sich vorzugsweise um einen in zwei Achsen bewegbaren Spiegel, der Licht im Strahlengang auf vorzugsweise um zwei Achsen schnell steuerbare Piezo-Kippspiegel lenkt. Zu diesem Zweck weist der Strahler vorzugsweise neben dem Strahlteilerspiegel mindestens einen in zwei Achsen bewegbaren Spiegel und einen Facettenspiegel auf, wobei der Spiegel zur Ablenkung von Strahlen in Richtung zum Facettenspiegel und der Facettenspiegel zur Ablenkung von Strahlen in Richtung zum Fangspiegel ausgebildet sind.

Es ist nach der Erfindung vorgesehen, dass der Fangspiegel relativ zum Kollimationsspiegel entlang einer Längsachse der Teleskopoptik verlagerbar ausgebildet ist. Die verschiedenen Subaperturen der Teleskopoptik sorgen dafür, dass die Strahlen koaxial auf das Zielobjekt fokussiert werden. Die gemeinsame Fokussierung schließlich erfolgt durch eine axiale Verschiebung des Fangspiegels relativ zum Kollimationsspiegel entlang einer Längsachse der Teleskopoptik.

Zur Ausrichtung des Strahlers mit seiner Teleskopoptik auf das Zielobjekt ist es vorgesehen, dass der Strahler mindestens eine Kamera und eine Steuerungseinrichtung zur Auswertung von der Kamera aufgenommener Bilddaten und eine Einrichtung zur Ausrichtung des Strahlers mittels der Steuereinrichtung und der ausgewerteten Bilddaten aufweist.

Die Ausrichtung des Strahlers erfolgt also auf der Basis einer das Zielobjekt verfolgenden Kamera und einer zugeordneten Trackelektronik. Auf diese Weise wird vorzugsweise eine das Zielobjekt erfassende erste oder grob justierende Ausrichtung auf das Zielobjekt erreicht.

Die Erfindung sieht zur Feinausrichtung der Strahlen und/oder des Strahlers auf das Zielobjekt eine das Zielobjekt beleuchtende Lasereinrichtung vor, die Licht von einer Wellenlänge emittiert, die sich von der Wellenlänge der Strahlen des mindestens einen Strahlers unterscheidet und dass der Kollimationsspiegel und ein Facettenspiegel zur Ablenkung von vom Zielobjekt reflektiertem Laserlicht in Richtung zu Strahlengängen des Strahlenerzeugers ausgebildet sind.

Mittels des Beleuchtungslasers kann das Zielobjekt relativ großflächig bestrahlt werden, das vom Beleuchtungslaser emittierte Licht weist eine Wellenlänge auf, die sich von der Wellenlänge der Strahlen des Strahlenerzeugers unterscheidet. Das vom Zielobjekt zurückgestreute Licht des Beleuchtungslasers wird über den Kollimationsspiegel gesammelt und über den Facettenspiegel und den um zwei Achsen kippbaren Spiegel in die Strahlengänge der einzelnen Strahler der Strahlenerzeugungseinrichtung verteilt.

Zur feingenauen Ausrichtung der Strahlen und/oder des Strahlers auf das Zielobjekt besitzt der Strahler mindestens einen positionssensitiven Detektor und/oder eine Kamera zur Aufnahme von vom Zielobjekt reflektiertem Laserlicht und eine Regeleinrichtung zur Ermittlung von relativen Winkelablagen in Strahlengängen auf Basis von Daten des Detektors und/oder der Kamera und deren Korrektur mittels des Spiegels und/oder des Fangspiegels.

Das in die Strahlengänge des Strahlers reflektierte Licht des Beleuchtungs-lasers wird von dem vorstehend erwähnten Strahlenteilerspiegel auf den positionssensitiven Detektor und/oder eine Kamera abgebildet. Der Kollimationsspiegel dient dabei als Empfangsoptik und sorgt aufgrund seiner großen Apertur für eine hohe optische Auflösung und Lichtintensität. Dies ist beispielsweise dann von Vorteil, wenn zur Positionsdetektion und Feinausrichtung eine Kamera zum Einsatz kommt, wie es nach der Erfindung vorgesehen sein kann.

Der Detektor und/oder die Kamera stellen Datensignale zur Verfügung, auf deren Basis mittels einer Feintrackelektronik relative Winkelablagen in den einzelnen Strahlengängen der hochenergetischen Strahlen ermittelt werden und von der vorstehend erwähnten Regeleinrichtung unter Ansteuerung des Kippspiegels und des ebenfalls als Kippspiegel ausgebildeten Fangspiegels korrigiert werden. Diese Regelung ermöglicht auch die Korrektur von Winkelablagen, die durch atmosphärische Turbulenzeffekte auf dem Ausbreitungsweg der Energiestrahlen zum Zielobjekt erzeugt werden.

Es ist nach der Erfindung auch mindestens eine Laserlichtquelle vorgesehen, die einen in den Strahlengang des Strahlenerzeugers eingekoppelten Laserlichtstrahl emittiert, dessen Verlauf mittels des Detektors und/oder der Kamera zur Justierung von Strahlengängen des Strahlenerzeugers erfassbar ist. Zu diesem Zweck ist es nach der Erfindung vorgesehen, dass sich das von der Laserlichtquelle emittierte Licht hinsichtlich seiner Wellenlänge von der Wellenlänge der Strahlen des Strahlenerzeugers unterscheidet und ansonsten dem Strahlengang der Strahlen des Strahlenerzeugers folgt. Damit durchläuft dieses zur Justierung und Harmonisierung einzelner Strahlengänge verwendete Laserlicht den optischen Weg der Wirkstrahlen.

Schließlich ist es nach der Erfindung vorzugsweise auch noch vorgesehen, dass der Strahler Mittel aufweist zur Emission eines mittels eines wellenlängensensitiven Strahlenteilerspiegels auf einen positionssensitiven Detektor und/oder eine Kamera gerichteten Lichtstrahls, der zur Ermittlung einer Winkelablage erfassbar ist. Dieser Lichtstrahl kann genauso wie die reflektierte Strahlung des Beleuchtungslasers mittels der wellenlängensensitiven Strahlteilerspiegel auf den positionssensitiven Detektor beziehungsweise die Kamera abgebildet werden und daraus können Winkelablagen berechnet und mittels der Kippspiegel korrigiert werden.

### KURZE BESCHREIBUNG DER ZEICHNUNG

Es zeigen:
- Fig. 1: eine schematische Darstellung einer Ausführungsform eines Strahlers nach der vorliegenden Erfindung mit einem zugehörigen ersten Strahlungsverlauf;
- Fig. 2: eine Draufsicht in Richtung des Pfeils II in Fig. 1 auf die Ausführungsform nach Fig. 1;
- Fig. 3: eine schematische Darstellung einer Ausführungsform eines Strahlers nach der vorliegenden Erfindung mit einem zugehörigen zweiten Strahlungsverlauf; und
- Fig. 4: eine schematische Darstellung einer Ausführungsform eines Strahlers nach der vorliegenden Erfindung mit einem zugehörigen dritten Strahlungsverlauf.

### DARSTELLUNG VON BEVORZUGTEN AUSFÜHRUNGSBEISPIELEN

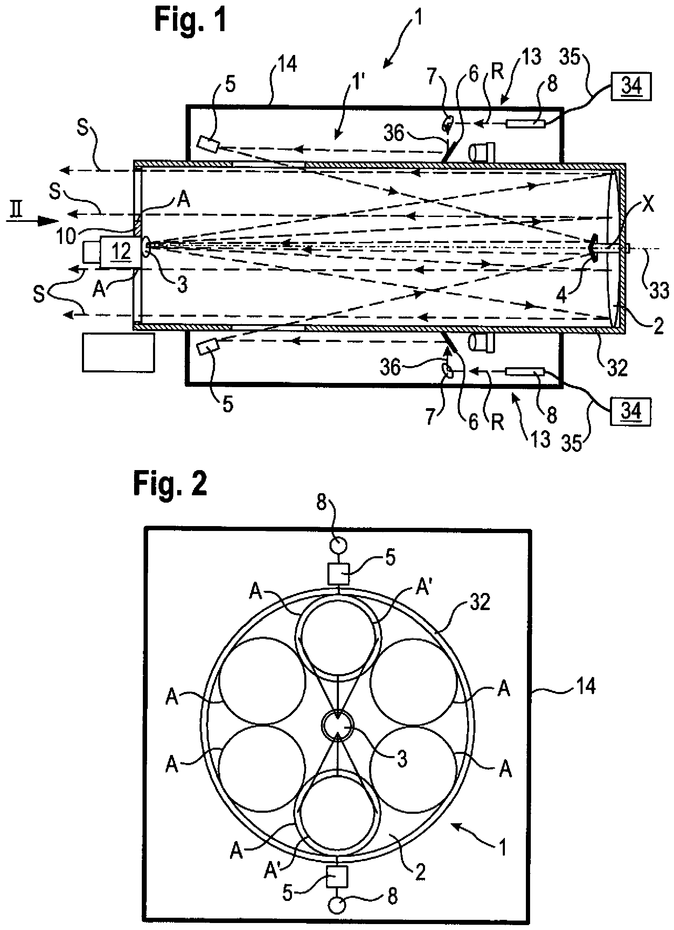

Fig. 1 der Zeichnung zeigt einen Strahler 1 nach einer Ausführungsform gemäß der vorliegenden Erfindung. Bei dem Strahler 1 handelt es sich um einen taktischen Strahler, der zum Einsatz im Gefechtsfeld vorgesehen ist, beispielsweise zur Bekämpfung von Mörsergranaten.

Der Strahler 1 weist eine Strahlenkombinationseinrichtung 1' mit einer Teleskopoptik auf, die einen Hauptspiegel oder Kollimationsspiegel 2 der vorzugsweise als Parabolspiegel ausgebildet ist, und einen Fangspiegel 3 aufweist. Der Parabolspiegel besitzt bei der dargestellten Ausführungsform einen Durchmesser von fünfzig Zentimetern bis einhundert Zentimetern und eine Brennweite von einhundert bis zweihundert Zentimetern.

Der Fangspiegel 3 ist als Parabolspiegel mit einem Durchmesser von fünf bis zehn Zentimetern und einer Brennweite von zehn bis zwanzig Zentimetern ausgebildet und bildet zusammen mit dem Kollimationsspiegel 2 die Teleskopoptik des erfindungsgemäßen Strahlers 1.

Ganz allgemein weist der Strahler 1 ein Hüllrohr 32 auf, in welchem teleskopierbar angeordnete optische Bauteile des erfindungsgemäßen Strahlers 1 vorgesehen sind. Der gesamte Strahler 1 ist eine in zwei Achsen mit hoher Richtgeschwindigkeit von etwa ein 1 rad/s ausrichtbare Struktur.

Der Fangspiegel 3 ist im Bereich des dem Kollimationsspiegel 2 gegenüberliegend angeordneten Endes des Hüllrohrs 32 entlang einer die optische Achse X bildenden Längsachse 33 des Hüllrohrs 32 verschiebbar vorgesehen.

Bei der dargestellten Ausführungsform sind sechs Strahlenerzeuger 34 vorgesehen, von denen in Fig. 1 und Fig. 2 nur zwei gezeigt sind und bei denen es sich um Industrie-Festkörperlaser mit einer Wellenlänge von 1,07 µm handelt. Dem Fachmann ist ohne weiteres klar, dass mehr oder weniger als sechs Strahlenerzeuger 34 vorgesehen sein können, wie dies vorstehend unter Bezugnahme auf den applikationsspezifischen Energiebedarf bereits ausgeführt worden ist. Die Strahlenerzeuger 34 emittieren jeder für sich hochenergetisches Laserlicht, welches über lediglich schematisch dargestellte Lichtleiteinrichtungen 35 und eine entsprechende Anzahl von Einkoppelvorrichtungen 13 in den Strahler 1 eingekoppelt wird. Die Einkoppelvorrichtungen 13 sind in einem das Hüllrohr 32 umgebenden Gehäuse 14 vorgesehen.

Bei den Lichtleiteinrichtungen 35 kann es sich beispielsweise um Lichtleiterfasern oder einer beliebigen anderen Einrichtung zur Einkoppelung und/oder zum Einbringen von Strahlung in den Strahler 1 handeln.

Die Lichtleitfasern 35 koppeln bei der dargestellten Ausführungsform über lediglich schematisch dargestellte Faserstecker 8 Laserlicht räumlich koaxial in den Strahler 1 ein. Zur Strahlenkombination der jeweiligen Laserstrahlen wird die aus dem zugeordneten Faserstecker 8 beziehungsweise aus den Faserenden austretende Laserstrahlung R mittels jeweils eines Parabolspiegels 7 zu einem parallelen Strahl mit geringem Durchmesser von einem bis zwei Zentimetern gebündelt und trifft in den einzelnen Strahlenachsen als Strahlenbündel 36 auf einen jeweiligen Strahlenteilerspiegel 6.

Von dort werden die Strahlen auf jeweils einen um zwei Achsen kippbaren Piezo-Kippspiegel 5 gelenkt. Von den Kippspiegeln 5 werden die Strahlen auf einen zentralen Facettenspiegel 4 geleitet, der auf der die optische Achse X des Strahlers bildenden Längsachse 33 des Hüllrohrs 32, dem Kollimationsspiegel 2 benachbart, vorgesehen ist. Dieser Facettenspiegel 4 dient dazu, die Strahlen auf unterschiedliche Subaperturen A' (Fig. 2) einer Austrittsoptik mit einer mit entsprechenden Austrittsaperturen A versehenen Referenzplatte 10 zu leiten, die an dem vom Kollimationsspiegel 2 abgewandten, stirnseitigen Ende des Hüllrohrs 32 vorgesehen ist, so dass die austretenden Strahlen S koaxial als Wirk-Laserstrahlung auf ein nicht näher dargestelltes Zielobjekt fokussiert sind. Die Anzahl der Subaperturen A' und folglich der Austrittsaperturen A entspricht der Anzahl der Strahlenerzeuger 34. Die gemeinsame Fokussierung der Strahlung erfolgt dabei über die vorstehend bereits erwähnte axiale Verschiebung des Fangspiegels 3.

Fig. 2 der Zeichnung zeigt in einer schematischen Darstellung eine Draufsicht von vorne auf den Strahler 1 nach Fig. 1. Der Fangspiegel 3 ist als Kippspiegel ausgebildet und besitzt die Form eines Parabolspiegels.

Zur Ausrichtung des Strahlers 1 auf das Zielobjekt ist eine Kamera 12 vorgesehen, deren Bilddaten von einer nicht näher dargestellten Steuereinrichtung in der Form einer Trackelektronik ausgewertet werden und zur Ansteuerung und Ausrichtung des Strahlers 1 auf das Zielobjekt mittels ebenfalls nicht näher dargestellter Aktuatoren dienen.

Die von der Kamera 12 aufgenommenen Bilddaten dienen dabei der grundsätzlichen Ausrichtung des Strahlers 1 auf das Zielobjekt Z, während eine Feinausrichtung der in Fig. 1 gezeigten Wirk-Laserstrahlung unter Zuhilfenahme eines Beleuchtungslasers 11 erfolgt.

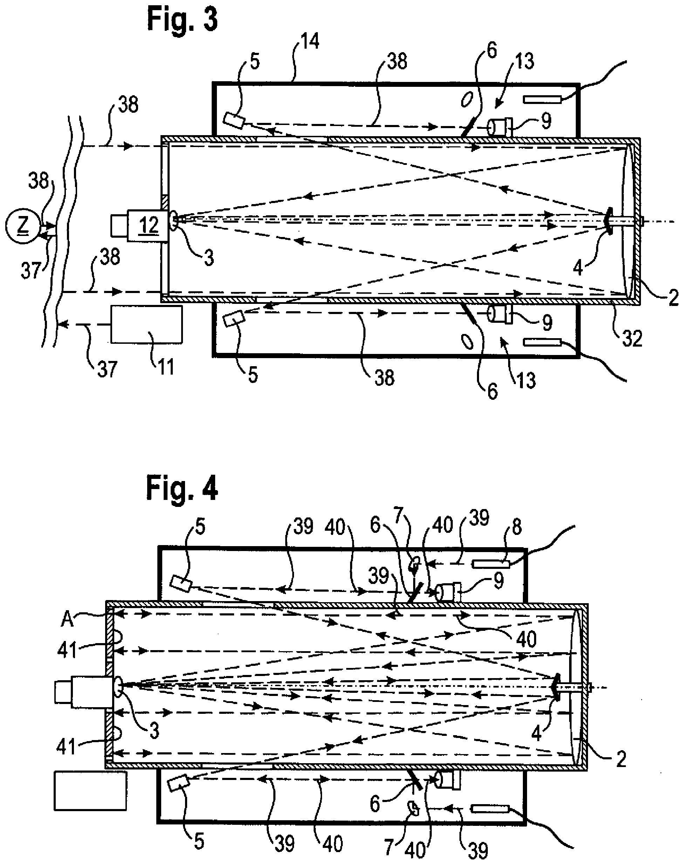

Der Beleuchtungslaser 11 beleuchtet das Zielobjekt Z, wie in Fig. 3 gezeigt ist, großflächig mit Laserlicht 37 und zwar mit einer Wellenlänge, die sich von der Wellenlänge des Wirk-Lasers unterscheidet. Bei der dargestellten Ausführungsform wird ein Beleuchtungslaser mit einer Wellenlänge von 532 nm verwendet.

Das vom Zielobjekt reflektierte Laserlicht 38 wird über den Kollimationsspiegel 2 gesammelt und über den Fangspiegel 3, den Facettenspiegel 4 und die Piezo-Kippspiegel 5 in die Strahlengänge der einzelnen Einkoppelvorrichtungen 13 verteilt. Im jeweiligen Strahlengang sind die bereits erwähnten Strahlenteilerspiegel 6 angeordnet, die das vom Ziel Z reflektierte Laserlicht 38 hindurchlassen und auf zur Feinausrichtung verwendete Positionssensoren 9 abbilden.

Die Ausgangssignale dieser zum Feintracking verwendeten Positionssensoren 9 werden einer nicht näher dargestellten Regeleinrichtung zugeführt, die mit hoher Genauigkeit die relativen Winkelablagen in den einzelnen Laser-Strahlzweigen ermittelt und die Laserstrahl-Ausrichtungen der jeweiligen Wirk-Laserstrahlung in einem geschlossenen Regelkreis mittels der Piezo-Kippspiegel 5 und des als Kippspiegel ausgebildeten Fangspiegels 3 korrigiert.

Dies ermöglicht es auch, Winkelablagen, die durch atmosphärische Turbulenzen auf dem Ausbreitungsweg der Wirk-Laserstrahlung zum Ziel erzeugt werden, zu korrigieren.

Die Verwendung des Kollimationsspiegels 2 als Empfangsoptik besitzt den großen Vorteil, dass durch seine große Empfangsapertur eine hohe optische Auflösung und Lichtstärke erreicht wird. Dies ist insbesondere dann von Vorteil, wenn als Positionssensoren 9 Quadrantendetektoren oder Kameras verwendet werden.

Über eine in den Strahlengang der Wirk-Laserstrahlung eingekoppelte Pilotlaserstrahlung 39 im roten Spektralbereich von beispielsweise 635 nm, die denselben optischen Weg wie die Wirk-Laserstrahlung durchläuft, kann die vorstehend beschriebene Regelung hinsichtlich der Winkelablagen auch zur Justierung und Harmonisierung der einzelnen Strahlengänge verwendet werden, wie in Fig. 4 gezeigt ist.

In die Austrittsapparaturen A können Retroreflektoren 41 eingebracht werden, über die die jeweilige Pilotlaserstrahlung 39 als reflektierte Strahlung 40 auf den Kollimationsspiegel 2 und von diesem über den Facettenspiegel 4 und die Piezo-Kippspiegel 5 sowie die Strahlenteilerspiegel 6 auf die Positionssensoren 9 abgebildet wird. Anhand der Ausgangssignale der Positionssensoren 9 können dann die Winkelablagen bestimmt und mittels der Piezo-Kippspiegel 5 korrigiert werden.

Der erfindungsgemäße Strahler ermöglicht es auf kostengünstige Weise, eine wirksame Energieeinwirkung auf ein bewegtes Objekt aus einer Entfernung von mehreren hundert Metern bis hin zu einigen Kilometern auszuüben, ohne kostenaufwendiger Entwicklungen für spezifisch adaptierte Strahlerzeuger mit entsprechendem Entwicklungsaufwand betreiben zu müssen.

Bezugszeichen in den Ansprüchen, der Beschreibung und den Zeichnungen dienen lediglich dem besseren Verständnis der Erfindung und beschränken den Schutzumfang nicht.

### Bezugszeichenliste

Es bezeichnen:
- 1: Strahler
- 1': Strahlenkombinationseinrichtung
- 2: Kollimationsspiegel
- 3: Fangspiegel
- 4: Facettenspiegel
- 5: Piezo-Kippspiegel
- 6: Strahlenteilerspiegel
- 7: Off-Axis Parabolspiegel
- 8: Faserstecker
- 9: Positionssensor, Quadrantendetektor, Kamera
- 10: Fenster, Referenzplatte
- 11: Beleuchtungslaser
- 12: Kamera
- 13: Einkoppelvorrichtungen
- 14: Gehäuse
- 32: Hüllrohr
- 33: Längsachse
- 34: Strahlenerzeuger
- 35: Lichtleiteinrichtung
- 36: Strahlenbündel
- 37: Laserlicht
- 38: reflektiertes Laserlicht
- 39: Pilotlaserstrahlung
- 40: reflektierte Pilotlaserstrahlung
- 41: Retroreflektoren

## Patentansprüche

1. Strahler (1) für gerichtete Energie mit einer Einrichtung zur Einkoppelung von Strahlen aus zumindest einem Strahlenerzeuger (34) und einer Strahlenkombinationseinrichtung (1'), welche die Strahlen zu kombinierten Strahlen zusammenführt,
wobei die Strahlenkombinationseinrichtung (1') eine Teleskopoptik mit einem Kollimationsspiegel (2), durch welchen Strahlung auf ein Zielobjekt ausrichtbar ist, und einen Fangspiegel (3) aufweist und die Einrichtung zur Aufnahme von gerichteten Strahlen aus einer Mehrzahl von Lichtleiteinrichtungen (35) aus dem mindestens einen Strahlenerzeuger (34) ausgebildet ist,
wobei der Strahler (1) mehrere um zwei Achsen bewegbare Spiegel (5) und einen Facettenspiegel (4) umfasst, wobei die Spiegel (5) zur Ablenkung von Strahlen von den Lichtleiteinrichtungen (35) in Richtung zum Facettenspiegel (4) und der Facettenspiegel (4) zur Ablenkung von Strahlen in Richtung zum Fangspiegel (3) ausgebildet sind, und
der Strahler (1) eine Kamera (12) umfasst, welche zur Ausrichtung des Strahlers (1) auf das Zielobjekt dient, und
der Strahler (1) zur feingenauen Ausrichtung der Strahlen auf das Zielobjekt mindestens einen positionssensitiven Detektor (9) und einen Beleuchtungslaser (11) umfasst, wobei der Beleuchtungslaser (11) dazu eingerichtet ist, das Zielobjekt mit Laserlicht zu beleuchten,
wobei das vom Zielobjekt reflektierte Laserlicht (38) über den Kollimationsspiegel (2) gesammelt wird und über den Fangspiegel (3), den Facettenspiegel (4) und die Spiegel (5) auf den mindestens einen positionssensitiven Detektor (9) abgebildet wird, und
wobei der Strahler (1) eine Regeleinrichtung umfasst, welche zur Ermittlung von relativen Winkelablagen in Strahlengängen auf Basis von Daten des mindestens einen positionssensitiven Detektors (9) und der Kamera (12) und zu deren Korrektur mittels des entsprechenden Spiegels (5) und/oder des Fangspiegels (3) eingerichtet ist.

2. Strahler (1) nach Anspruch 1, wobei der Strahler (1) zur räumlich weitgehend koaxialen Einkoppelung von Strahlen in den Strahler (1) aus zumindest einer hochenergetischen Laserlichtquelle ausgebildet ist.

3. Strahler (1) nach Anspruch 1 oder 2, wobei der Strahler (1) zur Bündelung der Strahlen zu einem parallelen Strahl mittels eines Parabolspiegels (7) und zur Leitung der Strahlen in einzelnen Strahlachsen mittels eines Strahlteilerspiegels (6) auf unterschiedliche Subaperturen der Teleskopoptik ausgebildet ist.

4. Strahler (1) nach einem der vorstehenden Ansprüche, wobei der Fangspiegel (3) relativ zum Kollimationsspiegel (2) entlang einer Längsachse (33) der Teleskopoptik verlagerbar ausgebildet ist.

5. Strahler (1) nach einem der vorstehenden Ansprüche, wobei der Strahler (1) eine Steuerungseinrichtung zur Auswertung von von der Kamera (12) aufgenommenen Bilddaten und eine Einrichtung zur Ausrichtung des Strahlers (1) mittels der Steuereinrichtung und der Bilddaten umfasst.

6. Strahler (1) nach einem der vorstehenden Ansprüche, wobei der Beleuchtungslaser (11) Laserstrahlen (37) einer sich von der Wellenlänge der Strahlen unterscheidenden Wellenlänge aussendet, wobei der Kollimationsspiegel (2) und ein Facettenspiegel (4) zur Ablenkung von vom Zielobjekt reflektiertem Laserlicht in Richtung zu Strahlengängen des Strahlenerzeugers (34) ausgebildet sind.

7. Strahler (1) nach Anspruch 1, wobei der Strahler (1) Mittel zur Emission eines mittels wellenlängensensitiver Strahlenteilerspiegel (6) auf den mindestens einen positionssensitiven Detektor (9) und/oder die Kamera (12) gerichteten Lichtstrahls (39), der zur Ermittlung einer Winkelablage erfassbar ist, umfasst.

## Claims

1. Radiator (1) for directed energy, comprising a device for feeding in beams from at least one beam generator (34) and a beam combination device (1') which brings the beams together to form combined beams,
wherein the beam combination device (1') has a telescope optical system, comprising a collimation mirror (2) by means of which radiation can be orientated onto a target object, and a secondary mirror (3), and the device is configured to receive directed beams from a plurality of light guide devices (35) from the at least one beam generator (34),
wherein the radiator (1) comprises a plurality of mirrors (5) movable about two axes and a facetted mirror (4), the mirrors (5) being configured to deflect beams from the light guide devices (35) towards the facetted mirror (4), and the facetted mirror (4) being configured to deflect beams towards the secondary mirror (3), and
the radiator (1) comprises a camera (12) for orientating the radiator (1) towards the target object, and
the radiator (1) comprises at least one position-sensitive detector (9) and an illuminating laser (11) for high-precision orientation of the beams onto the target object, the illuminating laser (11) being set up to illuminate the target object with laser light,
wherein the laser light (38) reflected from the target object is collected by way of the collimation mirror (2) and imaged onto the at least one position-sensitive detector (9) by way of the secondary mirror (3), the facetted mirror (4) and the mirrors (5), and
wherein the radiator (1) comprises a regulation device set up to determine relative angular offsets in beam paths on the basis of data from the at least one position-sensitive detector (9) and the camera (12) and to correct them by means of the corresponding mirror (5) and/or the secondary mirror (3).

2. Radiator (1) according to claim 1, wherein the radiator (1) is configured to feed beams, substantially spatially coaxially, into the radiator (1) from at least one high-energy laser light source.

3. Radiator (1) according to either claim 1 or claim 2, wherein the radiator (1) is configured to bundle the beams to form a parallel beam by means of a parabolic mirror (7) and to guide the beams onto different sub-apertures of the telescope optical system on individual beam axes by means of a beam splitter mirror (6).

4. Radiator (1) according to any of the preceding claims, wherein the secondary mirror (3) is configured displaceable along a longitudinal axis (33) of the telescope optical system relative to the collimation mirror (2).

5. Radiator (1) according to any of the preceding claims, wherein the radiator (1) comprises a control device for evaluating image data captured by the camera (12) and a device for orientating the radiator (1) by means of the control device and the image data.

6. Radiator (1) according to any of the preceding claims, wherein the illuminating laser (11) emits laser beams (37) of a wavelength differing from the wavelength of the beams, the collimation mirror (2) and a facetted mirror (4) being configured to deflect laser light, reflected from the target object, towards beam paths of the beam generator (34).

7. Radiator (1) according to claim 1, wherein the radiator (1) comprises means for emitting a light beam (39), which is directed onto the at least one position-sensitive detector (9) and/or the camera (12) by means of wavelength-sensitive beam splitter mirrors (6) and which can be detected to determine an angular offset.

## Revendications

1. Émetteur (1) pour énergie dirigée avec un dispositif pour injecter des rayons provenant d'au moins un générateur de rayons (34) et un dispositif de combinaison de rayons (1') qui réunit les rayons en rayons combinés,
dans lequel le dispositif de combinaison de rayons (1') présente une optique de télescope avec un miroir de collimation (2) par lequel le rayonnement peut être orienté sur un objet cible, ainsi qu'un miroir secondaire (3), et le dispositif est conçu pour recevoir des rayons dirigés provenant d'une pluralité de dispositifs de guidage de lumière (35) sortant dudit au moins un générateur de rayons (34),
dans lequel l'émetteur (1) comprend plusieurs miroirs (5) mobiles autour de deux axes et un miroir à facettes (4), les miroirs (5) étant conçus pour dévier des rayons provenant des dispositifs de guidage de lumière (35) en direction du miroir à facettes (4) et le miroir à facettes (4) étant conçu pour dévier des rayons en direction du miroir secondaire (3), et
dans lequel l'émetteur (1) comprend une caméra (12) qui sert à orienter l'émetteur (1) sur l'objet cible, et
dans lequel l'émetteur (1) comprend, pour l'orientation précise des rayons sur l'objet cible, au moins un détecteur sensible à la position (9) et un laser d'éclairage (11), le laser d'éclairage (11) étant conçu pour éclairer l'objet cible avec une lumière laser,
dans lequel la lumière laser (38) réfléchie par l'objet cible est collectée par le miroir de collimation (2) et est reproduite sur ledit au moins un détecteur sensible à la position (9) par le miroir secondaire (3), le miroir à facettes (4) et les miroirs (5), et
dans lequel l'émetteur (1) comprend un dispositif de réglage qui est conçu pour déterminer des décalages angulaires relatifs dans des trajets de rayons sur la base de données dudit au moins un détecteur sensible à la position (9) et de la caméra (12) et pour leur correction au moyen du miroir (5) correspondant et/ou du miroir secondaire (3).

2. Émetteur (1) selon la revendication 1, dans lequel l'émetteur (1) est conçu pour l'injection dans l'émetteur (1), de manière sensiblement coaxiale spatialement, de rayons provenant d'au moins une source de lumière laser à haute énergie.

3. Émetteur (1) selon la revendication 1 ou 2, dans lequel l'émetteur (1) est conçu pour concentrer les rayons en un faisceau parallèle au moyen d'un miroir parabolique (7) et pour guider les rayons dans différents axes de faisceau au moyen d'un miroir diviseur de faisceau (6) sur différentes sous-ouvertures de l'optique de télescope.

4. Émetteur (1) selon l'une des revendications précédentes, dans lequel le miroir secondaire (3) est conçu de manière à pouvoir être déplacé par rapport au miroir de collimation (2) le long d'un axe longitudinal (33) de l'optique de télescope.

5. Émetteur (1) selon l'une des revendications précédentes, dans lequel l'émetteur (1) comprend un dispositif de commande pour évaluer les données d'image enregistrées par la caméra (12) et un dispositif pour orienter l'émetteur (1) au moyen du dispositif de commande et des données d'image.

6. Émetteur (1) selon l'une des revendications précédentes, dans lequel le laser d'éclairage (11) émet des rayons laser (37) d'une longueur d'onde différente de la longueur d'onde des rayons, le miroir de collimation (2) et un miroir à facettes (4) étant conçus pour dévier la lumière laser réfléchie par l'objet cible en direction des trajets de rayons du générateur de rayons (34).

7. Émetteur (1) selon la revendication 1, dans lequel l'émetteur (1) comprend des moyens pour émettre un faisceau lumineux (39) qui est dirigé au moyen de miroirs diviseurs de faisceau (6) sensibles à la longueur d'onde sur ledit au moins un détecteur sensible à la position (9) et/ou la caméra (12) et qui peut être détecté pour déterminer un décalage angulaire.
